# Europäisches Patentamt
# European Patent Office
# Office européen des brevets

(19)

(11) Numéro de publication: **0 032 854**
**B1**

(12)

# FASCICULE DE BREVET EUROPEEN

(45) Date de publication du fascicule du brevet:
21.09.83

(51) Int. Cl.³: **C 01 B 33/28**

(21) Numéro de dépôt: **81400018.8**

(22) Date de dépôt: **08.01.81**

(54) **Nouveau procédé d'obtention d'un silico-aluminate cristallin de type A, à reprise d'eau élevée, et notamment de type 4A, et produit ainsi obtenu.**

(30) Priorité: **18.01.80 FR 8001046**

(43) Date de publication de la demande:
**29.07.81 Bulletin 81/30**

(45) Mention de la délivrance du brevet:
**21.09.83 Bulletin 83/38**

(84) Etats contractants désignés:
**AT BE CH DE FR GB IT LI LU NL SE**

(56) Documents cités:
**FR-A-1 536 947**
**FR-A-2 376 074**
**FR-A-2 384 716**
**GB-A-2 005 653**
**US-A-3 674 426**

(73) Titulaire: **RHONE-POULENC CHIMIE DE BASE, 25, quai Paul Doumer, F-92408 Courbevoie (FR)**

(72) Inventeur: **Latourrette, Bertrand, 21, alleé Clémencet, F-93340 Le Raincy (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

ACTORUM AG

Nouveau procédé d'obtention d'un silicoaluminate cristallin de type A, à reprise d'eau élevée, et notamment de type 4A, et produit ainsi obtenu

La présente invention a pour objet un nouveau procédé d'obtention d'un silicoaluminate à reprise d'eau élevée, de rapport molaire $SiO_2/Al_2O_3$ supérieur à 1,85, pouvant aisément être mis en œuvre, ainsi que le produit obtenu.

On sait qu'il est connu de fabriquer des zéolites de type A enrichies en $SiO_2$. Ainsi, dans le brevet français FR-A 1536947 de Wey, Guth et Collin, on décrit un procédé pour l'obtention de telles zéolites à partir de mélanges contenant les oxydes constituant les zéolites dans des rapports molaires compris dans les limites suivantes:

| | |
|---|---|
| $SiO_2/Al_2O_3$ | 5-15 |
| $Na_2O/Al_2O_3$ | 7,5-17,8 |
| $SiO_2/H_2O$ | 0,0152-0,0734 |
| $Na_2O/H_2O$ | 0,038-0,070 |

Le procédé d'obtention décrit consiste ensuite à porter un mélange de silicate et d'aluminate à une température proche de la température d'ébullition en maintenant une température élevée, sous agitation, pendant un temps suffisant pour l'obtention des cristallites de type A.

Mais un tel procédé présente deux inconvénients: il implique de travailler en milieu relativement dilué, et il ne donne pas le moyen d'une fabrication en continu.

Dans le brevet français FR-A 1257034, on a décrit un procédé pour obtenir directement un silicoaluminate de type A répondant à la formule $Na_2O, Al_2O_3, 2 SiO_2, 4 \cdot 6 H_2O$. Mais, dans ce cas, on fait appel à une solution très diluée et le temps nécessaire à l'obtention du résultat est long.

On a aussi préconisé dans le brevet français FR-A 1310548 de faire appel à un système réactif de rapport $SiO_2/Al_2O_3$ égal ou supérieur à 2, en partant de kaolin, dans un milieu plus concentré, mais le produit obtenu ne renferme que de 85 à 87% en poids de zéolite A pour un temps nécessaire à son obtention qui demeure long.

On constate que si dans la littérature il existe un grand nombre de documents et de brevets traitant de la fabrication des silicoaluminates cristallins de type A en discontinu, peu de documents traitent de la manière de les obtenir en continu. Selon l'US-A 3071434, cette difficulté provient de la structure complexe des cristaux qui nécessitent d'ordinaire un temps relativement long pour se former à partir des réactifs hautement désordonnés distribués initialement de manière aléatoire à travers les phases liquide et solide du milieu réactionnel.

Une première approche pour résoudre ce genre de problème a consisté à prévoir une recirculation ou recyclage de liqueurs. Ainsi, dans l'US-A 3071434, il est revendiqué de recycler une partie de la suspension contenant du cristallite. On doit noter que l'on est cependant limité à un milieu assez dilué correspondant au système de rapports molaires suivants:

| | |
|---|---|
| $Na_2O/SiO_2$ | 0,8-3,0 |
| $SiO_2/Al_2O_3$ | 0,5-2,5 |
| $H_2O/Na_2O$ | 35-200 |

C'est pourquoi on a cherché à modifier le processus en l'orientant dans un processus de type à zones successives, comme dans l'US-A 3425800 ou comme dans les brevets français FR-A 2376074 et FR-A 2384716 au nom de la titulaire.

Mais on se heurte alors soit, comme précédemment, à des limites dans la concentration du milieu, soit à la présence de liqueur mère riche en alumine.

On sait en effet que selon l'art antérieur on travaille généralement en excès d'aluminate, ce qui fait que le rapport $SiO_2/Al_2O_3$ est en réalité inférieur à 2. Cela présente un inconvénient sur le plan du procédé: liqueurs mères riches en alumine.

On a aussi proposé de travailler dans des conditions sensiblement stœchiométriques, comme dans le GB-A 2005653, mais l'on se trouve dans des conditions de solutions relativement diluées.

Il en va de même dans l'US-A 3674426 où l'on décrit un procédé d'obtention de zéolite A, également dans un milieu dilué, avec des rapports molaires $SiO_2/Al_2O_3$ supérieurs à 2.

Toutefois, l'on remarque que dans ces conditions la reprise d'eau reste faible, et qu'il est nécessaire de faire appel à des sels de métaux lourds tels que bichromate, vanadate ou permanganate pour relever cette capacité.

On sait aussi qu'en ce qui concerne le produit les autres exigences en applications deviennent de plus en plus sévères: granulométries fines et resserrées, particules bien isolées, bonne stabilité thermique, etc.

Or on a maintenant trouvé, et c'est ce qui fait l'objet de la présente invention, un procédé qui permet d'obtenir directement une zéolite de type A, de rapport molaire $SiO_2/Al_2O_3$ supérieur à 1,85, et avantageusement au moins égal à 2, à capacité d'absorption d'eau élevée.

Le procédé de l'invention consiste tout d'abord à réaliser un milieu homogène des solutions de silicate et d'aluminate avant formation du gel, puis à gélifier le milieu, enfin à le faire évoluer jusqu'à formation de cristallites, et à séparer lesdites cristallites. Selon la présente invention, le rapport molaire $SiO_2/Al_2O_3$ dans le milieu initial de réaction est au moins égal à 1,85 et de préférence égal à 2.

Selon l'invention, on effectue un mélange de solutions de silicate et d'aluminate de sodium à partir d'une solution d'aluminate refroidie, avantageusement, entre −10 et +10°C, et d'une solution de silicate à une température telle que la température du milieu obtenue soit sensiblement inférieure à la température ambiante, en maintenant une agitation suffisante pour permettre la réalisation d'une solution homogène avant l'apparition d'un gel et en maintenant le rapport molaire dans le milieu de réaction à une valeur au moins égale à 1,85.

Bien entendu, cette température doit être déterminée par l'homme de l'art, de façon à réaliser un compromis entre la nécessité de ne pas atteindre de trop fortes viscosités, défavorables à une homogénéisation par un moyen mécanique, et l'obligation de retarder cette gélification jusqu'à ce que l'homogénéité soit réalisée.

On peut en fait considérer que le mélange doit avoir lieu au plus en une quinzaine de minutes.

Comme dit précédemment, le procédé s'applique aux milieux concentrés, c'est-à-dire contenant plus de 200 g/l de zéolites.

Selon une forme de mise en œuvre de l'invention,

a) on réalise un milieu initial répondant au système suivant exprimé en rapports molaires:

$Na_2O/SiO_2$     1,05-1,50
$SiO_2/Al_2O_3$   2-2,5 et de préférence
                  2-2,2
$H_2O/Na_2O$      20-40

en effectuant un mélange à partir d'une solution d'aluminate refroidie, avantageusement, entre −10 et +10°C, et d'un ajout d'une solution de silicate à une température telle que la température du milieu obtenue soit sensiblement inférieure à la température ambiante, en maintenant une agitation suffisante pour permettre la réalisation d'une solution homogène avant l'apparition d'un gel;

b) on élève la température du milieu réactionnel jusqu'à une valeur comprise entre 60 et 100°C;

c) on maintient le milieu à cette température pendant un temps suffisant, de 0,2 à 5 h, de manière à réaliser la cristallisation et la redispersion du silicoaluminate sous la forme d'une suspension de cristaux dans la phase liquide;

d) on sépare et sèche les cristaux ainsi obtenus.

Il est important dans le procédé de l'invention de veiller à la qualité du mélange initial, de manière à permettre l'homogénéisation du milieu en un temps inférieur au temps de gélification à la température d'équilibre dudit mélange. Avantageusement, ce temps est inférieur à 15 min.

On s'aperçoit que, de manière inattendue, l'on obtient un silicoaluminate de rapports molaires égaux à ceux de la composition de départ, et ce sans être obligé de travailler en excès d'alumine. Par ailleurs, l'on observe que le produit obtenu présente une grande stabilité thermique et une reprise d'eau très importante.

De plus, de cette manière, les concentrations en réactifs en fin d'évolution dans la phase liquide peuvent être maintenues très faibles en $Al_2O_3$ et $SiO_2$, moins de 10 g/l et avantageusement moins de 5 g/l, tout en maintenant une concentration en zéolite très élevée, de l'ordre d'au moins 200 g/l, la concentration en $Na_2O$ étant d'au moins 70 g/l lorsque le métal alcalin est le sodium.

Le procédé selon l'invention peut être mis en œuvre de manière continue ou discontinue.

De manière continue:

De façon pratique, on opère comme suit:

— On réalise tout d'abord le mélange d'une solution d'aluminate de sodium, refroidie dans l'intervalle indiqué ci-avant, et d'une solution de silicate de sodium qui se trouve à une température voisine de la température ambiante.

— Avant gélification, on pulvérise ce mélange dans une première zone d'une densité inférieure à la densité du mélange aqueux, chauffée à une température telle qu'après contact ledit mélange aqueux soit porté à la température de réaction choisie, et ladite première zone étant constituée par un milieu caloporteur non miscible à l'eau, tel que bain d'huile ou de pétrole.

— On maintient cette température dans le bain, dans une seconde zone en aval, jusqu'à ce que la transformation dans la phase cristalline soit complète, tout en assurant un avancement piston dans cette zone aval.

— On recueille à l'état de suspension le milieu réactionnel renfermant les cristallites de silicoaluminates.

— On sépare les cristallites de la suspension par tout moyen connu, tel que filtration ou centrifugation, on les lave et les recueille.

De manière avantageuse, la première zone est une zone de transfert où le milieu est soumis à une agitation pendant un temps de séjour très court, de 1 à 2 s, alors que la deuxième zone est à avancement piston et correspond à un temps de séjour beaucoup plus long.

Mais la présente invention sera plus aisément comprise à l'aide des exemples suivants, donnés à titre indicatif mais nullement limitatif.

*Exemple 1:*

Une solution d'aluminate de sodium à 219,5 g d'aluminate est dissoute dans 757,3 g d'une solution à 10 g/l de NaOH et est refroidie à −5°C dans un échangeur tubulaire 1, sous un débit de 10 l/h. Le flux refroidi est mélangé en continu à un flux 3 de 4 l/h d'une solution de silicate de sodium prise à 20°C et titrant 26,9% de $SiO_2$ et 39,46% de $Na_2O$ en poids, dans un réacteur agité 2.

Le mélange homogène, dont la température s'établit au voisinage de 15°C, alimente au moyen d'une pompe péristaltique 4 un injecteur 5 à capillaires de 0,5 mm de diamètre formant en continu des gouttes qui tombent dans la partie supérieure d'un réacteur 6 rempli de pétrole maintenu à 85°C par une circulation 7 de saumure chauffée.

La densité du bain est ajustée de façon que le temps moyen de chute des gouttes formées par les capillaires soit de 3 s. Au bout de ce temps, les particules sphériques sont gélifiées et s'accumulent au fond du réacteur, et se transforment peu à peu en une suspension fluide de silicoaluminate qui se rassemble dans la partie conique 9 du réacteur 6. On soutire en continu cette suspension par un tube d'aspiration 8 à raison de 14 l/h, après 1 h d'alimentation continue des réactifs, afin de définir un temps de séjour moyen de réactifs de 2 h 15 min dans le réacteur.

La suspension aspirée est ensuite essorée et lavée par tout moyen connu, puis séchée à l'étuve à 100°C.

Les conditions de l'exemple correspondent à un système initial:

$SiO_2/Al_2O_3$   2,00
$Na_2O/SiO_2$     1,19
$H_2O/Na_2O$      26,00

A la fin, on note que les eaux mères renferment 70 g/l de $Na_2O$, 2,6 g/l de $SiO_2$ et 3,0 g/l de $Al_2O_3$.

Le rendement théorique

$$\frac{\text{poids de zéolite anhydre théorique}}{\Sigma \text{ matières de départ}}$$

est de 19%.

La formule chimique du produit obtenu est 1,06 $Na_2O$, $Al_2O_3$, 2,04 $SiO_2$.

On voit que le rapport $\dfrac{SiO_2}{Al_2O_3}$ est conservé.

Le spectre aux rayons X est caractéristique du type 4A.

La granulométrie mesurée au compteur Coulter donne un diamètre moyen des cristallites égal à 3,6 µm, et la répartition est la suivante:

| diamètre | % en poids |
|---|---|
| >15 µm | 2,5 |
| >10 µm | 4 |
| > 5 µm | 22 |
| > 3 µm | 68 |
| > 2 µm | 93 |
| > 1 µm | 98 |

Le pouvoir d'échange de cations est de 105 mg Ca/g de produit anhydre.

On détermine ensuite la reprise d'eau en mesurant la capacité d'absorption d'eau, déterminée comme le taux d'augmentation de poids d'un échantillon maintenu dans un dessicateur à une humidité relative donnée après avoir séché l'échantilon pendant 2 h à une température donnée.

De manière abrégée, dans les tableaux, on désignera cette valeur par

E 0,1 (10% HR)
E 0,6 (60% HR)

et on indiquera par ailleurs les températures de séchage.

Le tableau ci-après résume les résultats.

| Traitement thermique | 250°C (%) | 650°C (%) |
|---|---|---|
| E 0,1 | 20 | 22,4 |
| E 0,6 | 22,3 | 24,9 |
| E 0,9 | 25 | 29 |

On doit noter, d'une part, les valeurs élevées de la reprise d'eau, d'autre part, le comportement remarquable des silicoaluminates obtenus selon le procédé de l'invention après séchage à des températures de 650°C.

*Exemple 2:*

Cet exemple est identique au précédent, sauf que l'on a un rapport $Na_2O/SiO_2$ un peu plus élevé, le système étant le suivant:

$SiO_2/Al_2O_3$    2,00
$Na_2O/SiO_2$    1,30
$H_2O/Na_2O$    23,8

On note que la prise en masse est rapide, de l'ordre de 5 mm. Les eaux mères ont la composition suivante:

$Na_2O$ = 85 g/l; $SiO_2$ = 1,5 g/l; $Al_2O_3$ = 2,3 g/l.

Le rendement théorique est de 18,8.

Le diamètre moyen est de 2,8 µm et la granulométrie est la suivante:

| | | | |
|---|---|---|---|
| >15 µm | 1% | >3 µm | 45% |
| >10 µm | 2% | >2 µm | 85% |
| > 5 µm | 7% | >1 µm | 98% |

Il s'agit encore d'une zéolite 4A de formule 1,05 $Na_2O$, $Al_2O_3$, 2,05 $SiO_2$.

Le rapport $SiO_2/Al_2O_3$ est de 2,05.

Sur le produit obtenu, on a observé la cinétique d'échange en fonction du temps. Les résultats obtenus sont résumés par le tableau suivant.

| Temps en min | 2 | 5 | 15 | 30 |
|---|---|---|---|---|
| mg de Ca échangé par g de produit anhydre | 83 | 106 | 115 | 117 |

Après séchage à 250°C, on trouve les valeurs suivantes pour la reprise d'eau:

E 0,1 = 20,5%; E 0,6 = 22,4%; E 0,9 = 24%

*Exemple 3:*

Cet exemple est identique au précédent, sauf que l'on augmente un peu la dilution:

$SiO_2/Al_2O_3$    2,0
$Na_2O/SiO_2$    1,30
$H_2O/Na_2O$    25

Les eaux mères ont la composition suivante:

$Na_2O$ = 85 g/l; $SiO_2$ = 2 g/l; $Al_2O_3$ = 2,2 g/l.

Le diamètre moyen de cette zéolite est de 2,6 µm et sa granulométrie répond à la répartition suivante:

| >15 µm | 1,5% |
|---|---|
| >10 µm | 2,5% |
| > 5 µm | 7 % |
| > 3 µm | 38 % |
| > 2 µm | 78 % |
| > 1 µm | 98 % |

Après séchage à 250°C, les valeurs de reprise d'eau sont les suivantes:

E 0,1 = 20,3%; E 0,6 = 22,6%; E 0,9 = 23,5%.

Il s'agit encore d'une zéolite 4A de formule 1,09 $Na_2O$, $Al_2O_3$, 2,02 $SiO_2$.

*Exemple 4:*

Cet exemple est identique à l'exemple 3 en ce qui concerne les réactifs mais, au lieu de faire appel au dispositif selon l'exemple 3, on fait évoluer le milieu dans un ballon de 2 l à double enveloppe, muni d'un agitateur, en introduisant le mélange aluminate/silicate refroidi à l'état de sol dans le ballon à 85°C. Le temps de cristallisation est de 2 h 15 min. On obtient un silicoaluminate de type 4A sans hydroxysodalite. Le silicoaluminate cristallin répond à la formule 1,09 $Na_2O_3$, $Al_2O_3$, 2,02 $SiO_2$.

Les eaux mères ont la composition suivante:

$Na_2O$ = 85 g/l; $SiO_2$ = 2 g/l; $Al_2O_3$ = 2,2 g/l.

Cinétique d'échange:

| Temps en min | 2 | 5 | 15 | 30 |
|---|---|---|---|---|
| mg de Ca échangé par g de produit anhydre | 74 | 103 | 112 | 116 |

Le diamètre moyen est de 2,6 μm et la granulométrie est la suivante:

>15 μm    3%
>10 μm    6%
> 5 μm    17%
> 3 μm    38%
> 2 μm    73%
> 1 μm    95%

Le rendement théorique est le même qu'à l'exemple précédent.

*Exemple 5:*

Dans cet exemple, on part d'un système de rapports initiaux suivant:

$SiO_2/Al_2O_3$    2,20
$Na_2O/SiO_2$    1,30
$H_2O/Na_2O$    25,00

A partir d'une solution de silicate de soude de
   554,5 g de silicate rapport molaire 3,4
   82,4 g de soude caustique
   315,4 g d'eau,
soit 2,49 $SiO_2$, 1,74 $Na_2O$, 38,68 $H_2O$,
et d'une solution d'aluminate de soude de 219,5 g d'aluminate de soude sec dans 737,7 ml d'une solution de soude à 10 g/l, soit 1,13 $Al_2O_3$, 1,49 $Na_2O$, 42,1 $H_2O$.

Le mode opératoire est le suivant: on amène les deux solutions à environ −5°C, on coule lentement la solution de silicate dans la solution d'aluminate tout en maintenant une agitation rapide dans le milieu (ultra turax) de manière à former une solution homogène qui gélifie rapidement (de l'ordre de la minute).

Les autres conditions opératoires sont conformes aux autres exemples.

Le produit final de type 4A à 100% présente un rapport molaire $SiO_2/Al_2O_3$ conservé de 2,02 et, après séchage à 250°C, les reprises d'eau suivantes:

E 0,1 = 20%; E 0,6 = 22,1%; E 0,9 = 24,8%.

*Exemple 6:*

On part d'une solution de silicate 9,26 $Na_2O$, 29,1 $SiO_2$ dilué à raison de 352 g d'eau par 82,4 g de silicate et d'une solution d'aluminate, de manière à obtenir le milieu réactionnel suivant, composition initiale qui correspond à celle indiquée dans le brevet américain U.S.A. 3679426, exemple 17:

$Na_2O/SiO_2$    0,65
$SiO_2/Al_2O_3$    2,0
$H_2O/Na_2O$    150

Il s'agit donc d'une solution très diluée; mais, après avoir refroidi les deux solutions à environ 0°C, on alimente la solution de silicate dans celle d'alumine en maintenant une forte agitation mécanique de manière à obtenir l'homogénéité du mélange avant la formation de gel.

Le gel est ensuite maintenu 8 h à 50°C tout en maintenant une agitation mécanique, et on laisse cristalliser 20 h à 100°C.

Le produit obtenu répond à la formule 1 $Na_2O$, 1 $Al_2O_3$, 2,10 $SiO_2$ et présente un diamètre moyen des particules de 2,5 μm avec un écart 60% ± 1 μm, 86% ± 2 μm, et un refus au tamis de 10 = 5%.

Par ailleurs on observe les reprises d'eau suivantes à 250°C:

E 0,1 = 22%; E 0,6 = 25%; E 0,9 = 30%.

Ces exemples illustrent clairement l'intérêt de la présente invention, et montrent le caractère inattendu du procédé qui conduit à des zéolites à haute reprise d'humidité.

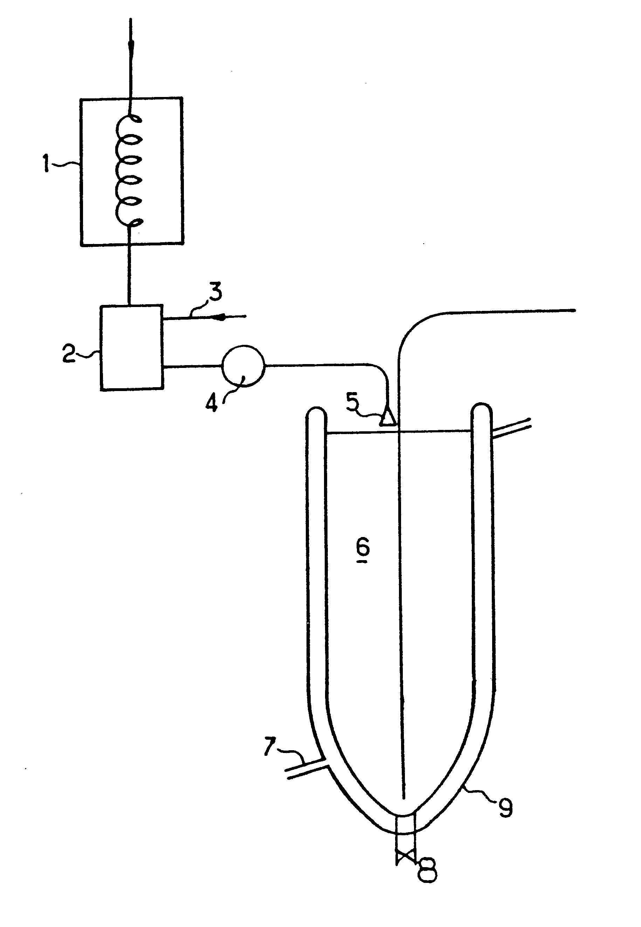

**Revendications**

1. Procédé d'obtention d'une zéolite de type A à forte reprise d'eau, de rapport molaire $SiO_2/Al_2O_3$ supérieur à 1,85, et avantageusement au moins égal à 2, caractérisé par le fait que:

a) on effectue un mélange de solutions de silicate et d'aluminate de sodium à partir d'une solution d'aluminate refroidie, avantageusement, entre −10 et +10°C, et d'une solution de silicate à une température telle que la température du milieu obtenue soit sensiblement inférieure à la température ambiante, en maintenant une agitation suffisante pour permettre la réalisation d'une solution homogène avant l'apparition d'un gel et en maintenant le rapport molaire dans le milieu de réaction à une valeur au moins égale à 1,85;

b) on élève la température du milieu réactionnel jusqu'à une valeur comprise entre 60 et 100°C;

c) on maintient le milieu à cette température pendant un temps suffisant, de 0,2 à 5 h, de manière à réaliser la cristallisation et la redispersion du silicoaluminate sous la forme d'une suspension de cristaux dans la phase liquide, et

d) on sépare et sèche les cristaux ainsi obtenus.

2. Procédé d'obtention d'une zéolite selon la revendication 1, caractérisé par le fait que l'on maintient dans le milieu de réaction un rapport molaire $SiO_2/Al_2O_3$ au moins égal à 2.

3. Procédé selon l'une des revendications 1 ou 2, caractérisé par le fait que le milieu de réaction correspond au système:

$SiO_2/Al_2O_3$    compris entre 2 et 2,5
$H_2O/Na_2O$    compris entre 20 et 40
$Na_2O/SiO_2$    compris entre 1,05 et 1,50

4. Procédé selon l'une des revendications 1 à 3, caractérisé par le fait que les concentrations des réactifs dans le milieu en fin d'évolution sont d'au plus 10 g/l en $Al_2O_3$ et en $SiO_2$, et avantageusement d'au plus 5 g/l en équilibre avec au moins 200 g/l de zéolite.

5. Procédé selon la revendication 4, selon lequel le métal alcalin est constitué par du sodium, caractérisé par le fait que la concentration en $NaO_2$ dans le milieu en fin d'évolution est d'au moins 70 g/l.

6. Procédé selon la revendication 5, caractérisé par le fait que:

a) on forme tout d'abord une solution d'aluminate de sodium, et on refroidit ensuite cette solution à une température telle que la température du milieu obtenue soit sensiblement inférieure à la température ambiante, en maintenant une agitation suffisante pour permettre la réalisation d'une solution homogène avant l'apparition du gel;

b) on élève la température du milieu réactionnel jusqu'à une valeur comprise entre 60 et 100°C;

c) on maintient le milieu à cette température pendant un temps suffisant, de 0,2 à 5 h, de manière à réaliser la cristallisation et la redispersion du silicoaluminate dans la phase liquide, et

d) on sépare et on sèche les cristaux ainsi obtenus.

7. Procédé selon la revendication 6, caractérisé par le fait que l'étape a est réalisée en un temps inférieur à 15 min.

## Claims

1. A process for producing a zeolite of type A with a high water absorption capacity, with an $SiO_2/Al_2O_3$ molar ratio higher than 1.85 and advantageously at least equal to 2, characterized in that:

(a) a mixture of solutions of sodium aluminate and silicate is made from a solution of aluminate which is advantageously cooled at from −10 to +10°C, and a solution of silicate, at a temperature such that the temperature of the resulting medium is substantially lower than the ambient temperature, with sufficient agitation being maintained to permit the formation of a homogenous solution having the appearance of a gel and with the molar ratio in the reaction medium being maintained at a value which is at least equal to 1.85;

(b) the temperature of the reaction medium is raised to a value in the range of from 60 to 100°C;

(c) the medium is maintained at that temperature for a sufficient period of time of from 0.2 to 5 h, so as to cause crystallisation and redispersion of the silicoaluminate in the form of suspension of crystals in the liquid phase, and

(d) the resulting crystals are separated and dried.

2. A process for producing a zeolite according to claim 1, characterized in that an $SiO_2/Al_2O_3$ molar ratio which is at least equal to 2 is maintained in the reaction medium.

3. A process according to one of claims 1 and 2, characterized in that the reaction medium corresponds to the system:

$SiO_2/Al_2O_3$　　between 2 and 2.5
$H_2O/Na_2O$　　between 20 and 40
$Na_2O/SiO_2$　　between 1.05 and 1.50

4. A process according to one of claims 1 to 3, characterized in that the levels of concentration of the reactants in the medium at the end of evolution are at most 10 g/l in respect of $Al_2O_3$ and $SiO_2$ and advantageously at most 5 g/l in a condition of equilibrium with at least 200 g/l of zeolite.

5. A process according to claim 4 wherein the alkali metal comprises sodium, characterized in that the concentration in respect of $Na_2O$ in the medium at the end of evolution is at least 70 g/l.

6. A process according to claim 5, characterized in that:

(a) a solution of sodium aluminate is first formed, and said solution is then cooled to a temperature such that the temperature of the resulting medium is substantially lower than the ambient temperature, with sufficient agitation being maintained to permit the formation of a homogeneous solution before the gel appears;

(b) the temperature of the reaction medium is raised to a value in the range of from 60 to 100°C;

(c) the medium is maintained at that temperature for a sufficient period of time of from 0.2 to 5 h so as to cause crystallisation and redispersion of the silicoaluminate in the liquid phase, and

(d) the resulting crystals are separated and dried.

7. A process according to claim 6, characterized in that step a is carried out in a period of time which is less than 15 min.

## Patentansprüche

1. Verfahren zur Herstellung eines Zeoliths vom Typ A mit starker Wasserwiederaufnahme, mit einem Molverhältnis $SiO_2/Al_2O_3$ >1,85 und vorteilhafter Weise mindestens = 2, dadurch gekennzeichnet, dass man

a) ein Gemisch aus Lösungen von Natriumsilicat und Natriumaluminat herstellt, ausgehend von einer vorteilhafterweise auf −10 bis +10°C abgekühlten Aluminatlösung und einer Silicatlösung von solcher Temperatur, dass die Temperatur des erhaltenen Gemisches im wesentlichen unter Raumtemperatur liegt, unter ausreichendem Rühren, um eine homogene Lösung vor dem Auftreten eines Gels zu erhalten und unter Aufrechterhaltung des Molverhältnisses in dem Reaktionsmedium auf einem Wert von mindestens = 1,85,

b) die Temperatur des Reaktionsmediums auf einen Wert im Bereich von 60 bis 100°C erhöht,

c) das Medium während einer ausreichenden Zeit von 0,2 bis 5 h bei dieser Temperatur hält, so dass die Kristallisation erfolgt und die Redispersion des Silicoaluminats in Form einer Suspension von Kristallen in der flüssigen Phase, und

d) die so erhaltenen Kristalle abtrennt und trocknet.

2. Verfahren zur Herstellung eines Zeoliths nach Anspruch 1, dadurch gekennzeichnet, dass man im Reaktionsmedium ein Molverhältnis $SiO_2/Al_2O_3$ von mindestens = 2 einhält.

3. Verfahren nach einem der Ansprüche 1 oder 2, dadurch gekennzeichnet, dass das Reaktionsmedium folgendem System entspricht:

$SiO_2/Al_2O_3$　　zwischen 2 und 2,5
$H_2O/Na_2O$　　zwischen 20 und 40
$Na_2O/SiO_2$　　zwischen 1,05 und 1,50

4. Verfahren nach einem der Ansprüche 1 bis 3, dadurch gekennzeichnet, dass die Konzentrationen der Reaktionspartner in dem Medium am Ende der Entwicklung (Reifung) höchstens 10 g/l an $Al_2O_3$ und an $SiO_2$ und vorteilhafterweise höchstens 5 g/l im Gleichgewicht mit mindestens 200 g/l Zeolith betragen.

5. Verfahren nach Anspruch 4, bei bem das Alkalimetall aus Natrium besteht, dadurch gekennzeichnet, dass die Konzentration an $Na_2O$ im Medium am Ende der Entwicklung mindestens 70 g/l beträgt.

6. Verfahren nach Anspruch 5, dadurch gekennzeichnet, dass man

a) zunächst eine Natriumaluminatlösung herstellt, diese Lösung dann auf eine solche Temperatur abkühlt, dass die Temperatur des erhaltenen Mediums im wesentlichen unterhalb der Raumtemperatur liegt, unter ausreichendem Rühren, damit eine homogene Lösung entsteht vor dem Auftreten des Gels,

b) die Temperatur des Reaktionsmediums auf einen Wert im Bereich von 60 bis 100°C erhöht,

c) das Medium bei dieser Temperatur während einer ausreichenden Zeit von 0,2 bis 5 h hält, so dass die Kristallisation und die Redispersion des Silicoaluminats in der flüssigen Phase erfolgt, und

d) die so erhaltenen Kristalle abtrennt und trocknet.

7. Verfahren nach Anspruch 6, dadurch gekennzeichnet, dass die Stufe a in einer Zeitspanne von weniger als 15 min durchgeführt wird.

0 032 854

9